## Europäisches Patentamt
## European Patent Office
## Office européen des brevets

(19)

(11) Veröffentlichungsnummer: **0 186 767**
**B1**

(12) **EUROPÄISCHE PATENTSCHRIFT**

(45) Veröffentlichungstag der Patentschrift:
24.02.88

(21) Anmeldenummer: **85114635.7**

(22) Anmeldetag: **18.11.85**

(51) Int. Cl.⁴: **B 61 H 5/00,** B 60 T 17/08

(54) Gelenkverbindung zwischen einem Bremszylinder und einem Bremsgestänge.

(30) Priorität: **21.12.84 DE 3447747**

(43) Veröffentlichungstag der Anmeldung:
**09.07.86 Patentblatt 86/28**

(45) Bekanntmachung des Hinweises auf die Patenterteilung:
**24.02.88 Patentblatt 88/8**

(84) Benannte Vertragsstaaten:
**CH DE FR LI SE**

(56) Entgegenhaltungen:
**DE-B-2 026 544**
**DE-C-906 102**
**FR-A-1 201 798**
**FR-A-2 160 461**

(73) Patentinhaber: **KNORR- BREMSE AG, Moosacher Strasse 80 Postfach 401060, D-8000 München 40 (DE)**

(72) Erfinder: **Wirth, Xaver, Dr., Birkhuhnweg 18, D-8045 Ismaning (DE)**

**Beschreibung**

Die Erfindung betrifft eine Gelenkverbindung zwischen einem Bremszylinder und einem Bremsgestänge, insbesondere für einen zwischen die Bremshebelenden einer Bremszange für Schienenfahrzeug-Scheibenbremsen eingeordneten Bremszylinder, mit einem an einem das Gehäuse bzw. die Kolbenstange darstellenden Bremszylinderteil vermittels einer zur Bremszylinderachse symmetrischen Drehflächenlagerung schwenkbar gehaltenen Lagerauge, an welchem um einen Querbolzen drehbar ein Bremsgestängeteil, gegebenenfalls das Bremshebelende, angelenkt ist, und wobei die Drehflächenlagerung die Bremszylinderachse ringförmig umgebende Lagerungsflächen in dem Bremszylinderteil zugewandten Übergangsbereich des Lagerauges aufweist.

Derartige Gelenkverbindungen müssen während Bremsungen hohe Druckkräfte, ansonsten aber nur geringe, aus Rückstellfedern resultierende Zugkräfte übertragen, wobei die Winkelauslenkungen zwischen dem durch die Gelenkverbindung zu verbindenen Teilen stets relativ klein sind.

Aus der DE-B-2 026 544 ist eine den eingangs genannten Merkmalen entsprechende Gelenkverbindung bekannt, wobei die Drehflächenlagerung einen zur Bremszylinderachse konzentrischen Lagerring mit zusätzlich in Richtung der Bremszylinderachse gekrümmt laufender Außenfläche aufweist. Bei der so gebildeten, sphärischen Drehflächenlagerung verlaufen die Lagerungflächen nur wenig geneigt zur Bremszylinderachse, so daß sie nur schlecht zum Übertragen hoher Druckkräfte geeignet sind.

Es ist Aufgabe der Erfindung, eine Gelenkverbindung der eingangs genannten Art derart auszugestalten, daß sie bei einfachem Aufbau von hohen Druckkräften belastbar ist und auch die weiteren, vorstehend erwähnten Anforderungen an eine derartige Gelenkverbindung zu erfüllen vermag.

Diese Aufgabe wird nach der Erfindung dadurch gelöst, daß die Drehflächenlagerung als vorgespannte Drucklagerung ausgebildet ist, wobei der Drehmittelpunkt bzw. die Drehachse der Drehlagerung sich zumindest nahe der in Druckrichtung elastisch vorgespannten, im Bereich der bremszylinderabgewandten Oberfläche des Lagerauges liegenden Angriffsstelle wenigstens einer Verschraubung am Lagerauge befindet und die Verschraubung nach Durchgreifen des Lagerauges mit seitlichem Spiel andererseits am Bremszylinderteil gehalten ist.

Die nach der weiteren Erfindung vorteilhaften Ausgestaltungsmöglichkeiten der Gelenkverbindung sind in den Merkmalen der Unteransprüche aufgezeigt.

Die Erfindung ist anhand der Zeichnungen verdeutlicht, und zwar zeigt

Fig.1 eine Aufsicht auf eine Bremszange für Schienenfahrzeug-Scheibenbremsen,

Fig.2 eine schematische Ansicht in Pfeilrichtung X nach Fig.1 auf die durch Schrägstellen der Bremsscheibe verwundene Bremszange,

Fig.3 ein Schnittbild durch einen Bremszylinder mit gemäß einer Ausführungsform der Erfindung ausgebildeter Gelenkverbindung angelenktem Lagerauge,

Fig.4 einen in der Bremszylinderachse verlaufenden Teilschnitt durch eine geringfügig abgewandelte Gelenkverbindung und

Fig.5 eine Stirnansicht auf die Gelenkverbindung.

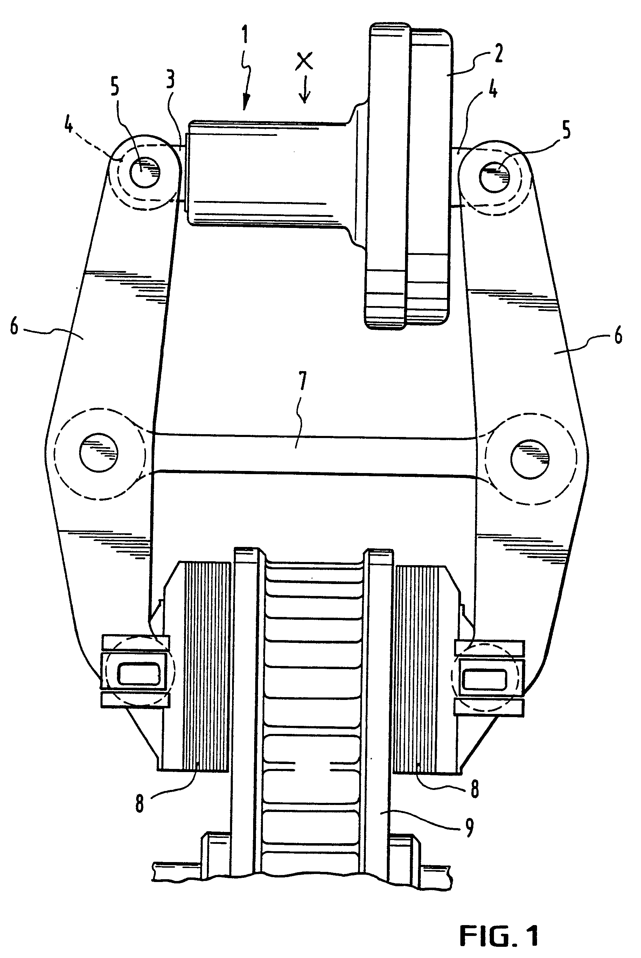

Gemäß Fig.1 weist die Bremszange für Schienenfahrzeug-Scheibenbremsen einen Bremszylinder 1 mit einem Gehäuse 2 und einer Kolbenstange 3 auf. Das Gehäuse 2 und die Kolbenstange 3 sind mittels Lageraugen 4 und Querbolzen 5 an den Enden zweier der Bremszange zugehörender Bremshebel 6 angelenkt. Die beiden Bremshebel 6 sind in ihrem mittleren Bereich vermittels einer Zugstange 7 gelenkig miteinander verbunden und tragen ihren dem Bremszylinder 1 abgewandten Enden Bremsbacken 8, welche an eine zwischen diese Bremsbacken 8 eingreifende Bremsscheibe 9 anpreßbar sind. Weiterhin können in Fig.1 nicht dargestellte, zur Zeichenebene senkrecht verlaufende Pendelhebel vorgesehen sein, welche sich von den Bremsbacken 8 zum nicht dargestellten Fahrzeugrahmen erstrecken.

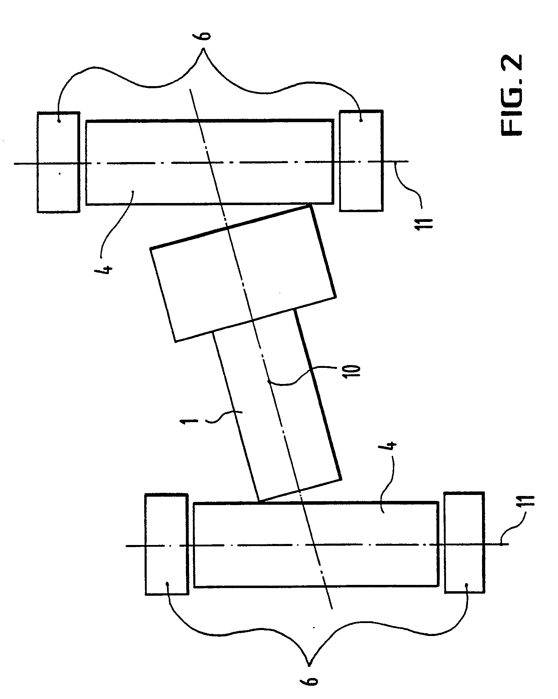

Beim Schrägstellen des Fahrzeugrahmens oder der Bremsscheibe 9 kann sich die aus Fig.1 ersichtliche Bremszange verwinden, derart, daß die beidseitigen Bremshebel 6 in unterschiedliche Höhenlagen geraten, wie es schematisch in der eine Ansicht in Pfeilrichtung X nach Fig.1 darstellenden Fig.2 mit übertriebener Höhenversetzung der beiden Bremshebel 6 gezeigt ist:

Nach Fig.2 befinden sich die doppelwangig ausgebildeten Bremshebel 6 in unterschiedlichen Höhenlagen, wobei sie jedoch die Lageraugen 4 weiterhin vertikal halten. Der Bremszylinder 1 muß dabei in eine Schräglage zwischen den beiden Bremshebeln gelangen, derart, daß die Bremszylinderachse 10 die Achsrichtung 11 der Querbolzen 5 und damit der Lageraugen 4 nicht mehr senkrecht schneidet.

Die so bedingten Winkelabweichungen zwischen der Bremszylinderachse 10 und den Achsrichtungen 11 müssen durch geeignete Gelenkverbindungen zwischen dem Bremszylinder 1 und den Lageraugen 4 aufgenommen werden.

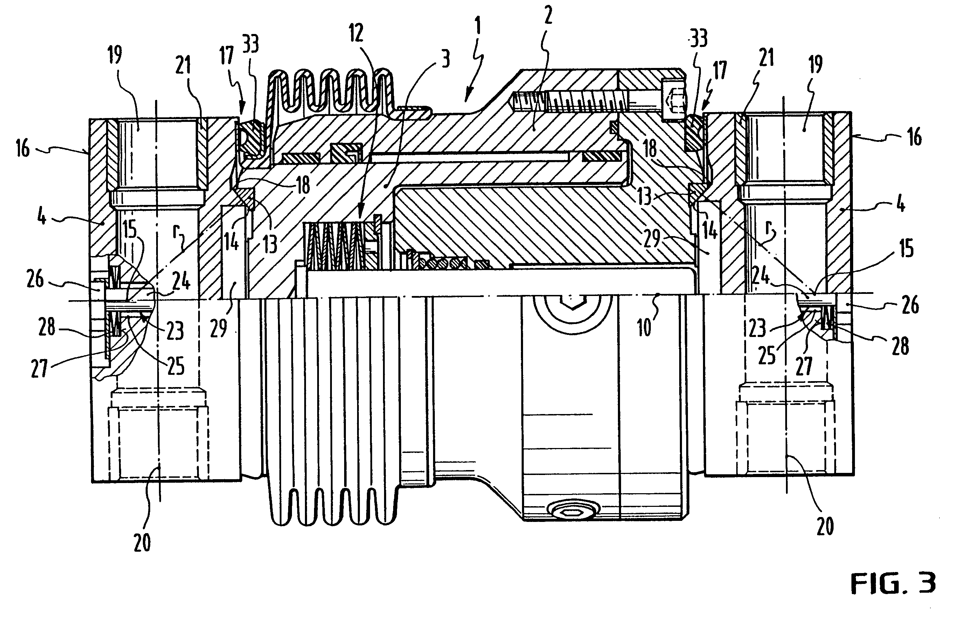

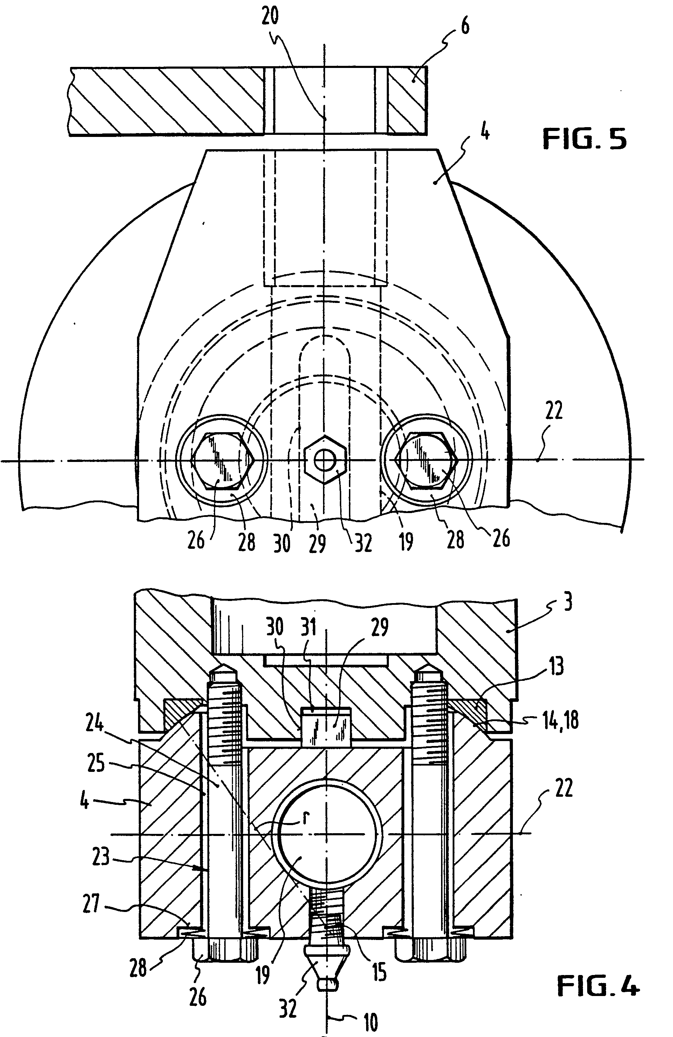

Die Fig.3 zeigt einen Bremszylinder 1 mit einem Gehäuse 2 und einer mit dem Bremszylinderkolben einstückigen Kolbenstange 3, wobei zwischen Gehäuse 2 und Kolbenstange 3 eine nach Nachstellvorrichtung 12 üblicher, hier nicht weiter interessierender Bauart eingeordnet ist. An den einander abgewandten Stirnseiten tragen sowohl das Gehäuse 2 wie Kolbenstange 3 je einen starr mit ihnen verbundenen Lagerungsring 13. Die im wesentlichen gleichartigen Lagerungsringe 13 weisen einen relativ großen Durchmesser auf, der annähernd dem Durchmesser der Kolbenstange 3 entspricht, ihre Breite ist jedoch, bezogen auf den Durchmesser, relativ klein. Auf den einander abgewandten Seiten sind beide Lageraungsringe 13 mit je einer Lagerungsfläche 14 versehen, welche nach dem Ausführungsbeispiel eine Kugelringfläche bildet, wobei der Kugelmittelpunkt 15 nahe der bremszylinderabgewandten Oberfläche 16 von über Übergangsbereiche 17 an das Gehäuse 2 bzw. die Kolbenstange angesetzten, zueinander im wesentlichen gleichartigen Lageraugen 4 befinden. Die Kugelradien r sind strichpunktiert eingezeichnet. Die beiden Lageraugen 4 weisen zu den Lagerungsflächen 14 komplementäre und auf diesen aufliegende Lagerungsflächen 18 auf, die Lagerungsflächen 14 und 18 bilden jeweils eine Drehflächenlagerung 14, 18. Die Lageraugen 4 sind mit Querbohrungen 19 versehen, deren Achsen 20 die Bremszylinderachse 10 im wesentlichen senkrecht schneiden, deren Enden mit Lagerbüchsen 21 versehen sind und welche zur Aufnahme und Lagerung der in Fig.3 nicht dargestellten Querbolzen 5 dienen. Auf einer aus Fig.5 ersichtlichen Geraden 22, welche sowohl die Bremszylinderachse 10 wie die Achse 20 senkrecht schneidet, befinden sich spiegelbildlich seitlich zur Bremszylinderachse 10 versetzt an jedem Lagerauge 4 zwei Schraubbolzen 23. Die Schäfte 24 der zur Bremszylinderachse 10 parallel verlaufenden Schraubbolzen 23 durchgreifen mit radialem Spiel in den Lageraugen 4 vorgesehene Bohrungen 25. Zwischen den nach der Ausführung gemäß Fig.3 mehr und nach der Ausführung gemäß Fig.4 weniger in das Lagerauge 4 eingelassenen Kopfteil 26 jedes Schraubbolzens 23 und der Schraubbolzen-Angriffsstelle 27 am Lagerauge 4 sind Tellerfedern 28 einkespannt. Die Kugelmittelpunkte 15 liegen auf der Bremszylinderachse 10 im Bereich deren Durchtrittsstelle durch die Angriffsstellen 27. Die Schraubbolzen 23 durchgreifen gemäß Fig.4 die Lageraugen 4 und sind mit der Kolbenstange 3 bzw. dem Gehäuse 2 verschraubt; die Schraubbolzen 23 durchgreifen dabei eine Fläche, welche von der im Übergangsbereich 17 angeordneten Drehflächenlagerung 14, 18 umschlossen ist. Weiterhin befindet sich in jedem Übergangsbereich 17 etwa innerhalb der Drehflächenlagerung 14, 18 eine Paßfeder 29, deren Längsrichtung etwa parallel zur Achse 20 verläuft. Die Enden der Paßfedern 29 sind in den Lageraugen 4 festgehalten, in ihren mittleren Bereichen greifen die Paßfedern 29 in Nuten 30 an der Kolbenstange 3 bzw. dem Gehäuse 2 ein, wobei sich zwischen der Paßfeder 29 und der Grundfläche der Nut 30 ein Spielabstand 31 befindet. Die Paßfeder 29 bewirkt somit eine sowohl um die Achse 10 wie die Achse 20 undrehbare Verbindung zwischen den Lageraugen 4 und dem Gehäuse 2 bzw. der Kolbenstange 3, die Lageraugen 4 sind trotz der sphärischen Drehflächenlagerung 14, 18 mit den Kugelringflächen darstellenden Lagerungflächen 14 und 18 nur um die durch den Kugelmittelpunkt 15 gehende Gerade 22 im Rahmen des zwischen den Schäften 24 und den Bohrungen 25 bestehenden Radialspieles schwenkbar. Diese Schwenkbarkeit reicht zur Aufnahme der zu Fig.2 erläuterten Schwenkbewegungen zwischen den Lageraugen 4 und dem Gehäuse 2 bzw. der Kolbenstange 3 aus. Das Verkanten der Kopfteile 26 relativ zur Fläche der Angriffsstelle 27 wird bei diesen Schwenkbewegungen der Lageraugen 4 durch über den Umfang geringfügig ungleichmäßige Kompression der Tellerfedern 28 aufgenommen.

Zur Schmierung der Querbolzenlagerung können, wie aus Fig.4 und 5 ersichtlich, die Lageraugen 4 mit in die Querbohrung 19 mündenden Schmiernippeln 32 versehen sein.

Zum Schutz der Drehflächenlagerungen 14,18 können diese umgebende Dichtringe 33 aus elastischem Material zwischen den Lageraugen 4 und dem Gehäuse 2 bzw. der Kolbenstange 3 vorgesehen sein, wie es in Fig.3 dargestellt ist.

Selbstverständlich ist es möglich, unter Wegfall der Lagerringe 13 die Lageruangsflächen 14 unmittelbar am jeweiligen Bremszylinderteil anzubringen. Es ist auch möglich, an den Lageraugen 4 die Lagerungsfläche 18 tragende Lagerringe vorzusehen.

Bei Weglassen der Paßfeder 29 kann trotz der an jedem Lagerauge 4 vorgesehenen Doppelanordnung von Schraubbolzen 23 eine gegebenenfalls erwünschte, geringe sphärische Beweglichkeit der Lageraugen 4 relativ zum Bremszylinder 1 erzielt werden. Bei die Lageraugen 4 nicht durchsetzender Querbolzenlagerung für die Bremshebel 6 ist es des weiteren möglich, jedes Lagerauge 4 mittels nur eines in der Bremszylinderachse 10 verlaufenden Schraubbolzens mit dem Gehäuse 2 bzw. der Kolbenstange 3 zu verbinden. Andererseits, falls nur die vorstehend erwähnte Beweglichkeit der Lageraugen 4 um die Gerade 22 als Drehachse angestrebt wird, ist es in Abänderung der vorstehend beschriebenen Ausführungsbeispiele auch möglich, die Drehflächenlagerung 14, 18 nicht mit als Kugelringflächen ausgebildeten Lagerungsflächen 14, 17, sondern mit als Zylinderflächen ausgebildeten Lagerungsflächen zu versehen, wobei die Zylinderachse wiederum mit der die Angriffsstelle 27 durchsetzenden Gerade 22 zusammenfällt.

In Abänderung zu den vorstehend beschriebenen Ausführungsbeispielen können die Schraubbolzen 23 auch lageraugenseitig mit Gewindeabschnitten enden, auf welche Mutterteile aufgeschraubt sind, welche sich über die Tellerfedern 28 gegen die Angriffsstellen 27 abstützen.

Bei allen vorstehend erwähnten Ausführungsbeispielen ist wesentlich, daß die Tellerfedern 28 die Lagerungsflächen der Drehflächenlagerung 14, 18 gegeneinander pressen und somit das Lagerauge 4 in Übertragungsrichtung der vom Bremszylinder 1 auszuübenden Bremskräfte formschlüssig, in entgegengesetzter Richtung mit beachtlicher Kraft kraftschlüssig und schwenkbar an den Bremszylinderteilen Gehäuse 2 bzw. Kolbenstange 3 halten, wobei die Tellerfedern 28 zugleich die Bewegungen zwischen den Kopfteilen 26 und den Lageraugen 4 aufnehmen.

Bezugszeichenliste
1 Bremszylinder
2 Gehäuse
3 Kolbenstange
4 Lagerauge
5 Querbolzen
6 Bremshebel
7 Zugstange
8 Bremsbacke
9 Bremsscheibe
10 Bremszylinderachse
11 Achsrichtung
12 Nachstellvorrichtung
13 Lagerungsring
14 Lagerungsfläche
15 Kugelmittelpunkt
16 Oberfläche
17 Übergangsbereich
18 Lagerungsfläche
14, 18 Drehflächenlagerung
19 Querbohrung
20 Achse
21 Lagerbuchse
22 Gerade
23 Schraubbolzen
24 Schaft
25 Bohrung
26 Kopfteil
27 Angriffsstelle
28 Tellerfedern
29 Paßfeder
30 Nut
31 Spielabstand
32 Schmiernippel
33 Dichtung
r Kugelradius
X Pfeilrichtung

**Patentansprüche**

1. Gelenkverbindung zwischen einem Bremszylinder und einem Bremsgestänge, insbesondere für einen zwischen die Bremshebelenden (6) einer Bremszange eingeordneten Bremszylinder (1), mit einem an einem das Gehäuse (2) bzw. die Kolbenstange (3) darstellenden Bremszylinderteil vermittels einer zur Bremszylinderachse (10) symetrischen Drehflächenlagerung (14, 18) schwenkbar gehaltenen Lagerauge (4), an welchem um einen Querbolzen (5) drehbar ein Bremsgestängeteil, gegebenenfalls das Bremshebelende (6), angelenkt ist, und wobei die Drehflächenlagerung (14, 18) die Bremszylinderachse (10) ringförmig umgebende Lagerungsflächen (14, 18) in dem Bremszylinderteil zugewandten Übergangsbereich (17) des Lagerauges (4) aufweist, dadurch gekennzeichnet, daß die Drehflächenlagerung (14, 18) als vorgespannte Drucklagerung ausgebildet ist, wobei der Drehmittelpunkt (15) bzw. die Drehachse der Drehlagerung (14, 18) sich zumindest nahe der in Druckrichtung elastisch vorgespannten, im Bereich der bremszylinderabgewandten Oberfläche (16) des Lagerauges (4) liegenden Angriffsstelle (27) wenigstens einer Verschraubung am Lagerauge (4) befindet und die Verschraubung nach Durchgreifen des Lagerauges (4) mit seitlichem Spiel andererseits am Bremszylinderteil (2, 3) gehalten ist.

2. Gelenkverbindung nach Anspruch 1, dadurch gekennzeichnet, daß die Lagerungsflächen Zylinderflächen sind, wobei die Zylinderachse die Bremszylinderachse (10) senkrecht schneidet.

3. Gelenkverbindung nach Anspruch 1, dadurch gekennzeichnet, daß die Lagerungsflächen (14, 18) Kugelflächen sind, wobei der Kugelmittelpunkt (15) sich auf der Bremszylinderachse (10) befindet.

4. Gelenkverbindung nach Anspruch 1, 2 oder 3 dadurch gekennzeichnet, daß die Verschraubung eine von den Lagerungsflächen (14, 18) umschlossene Fläche durchgreift.

5. Gelenkverbindung nach einem der vorstehenden Ansprüche, dadurch gekennzeichnet, daß die Verschraubung einen koaxial zur Bremszylinderachse (10) verlaufenden Schraubbolzen aufweist, dessen Schaft das Lagerauge mit seitlichem Spiel durchgreift und zwischen dessen Kopf- oder Mutterteil und dem Lagerauge Tellerfedern eingespannt sind.

6. Gelenkverbindung nach einem der Ansprüche 1 bis 4, dadurch gekennzeichnet, daß die Verschraubung seitlich spiegelbildlich versetzte und parallel zur Bremszylinderachse (10) verlaufende Schraubbolzen (23) aufweist, deren Schäfte (24) das Lagerauge (4) mit seitlichem Spiel durchgreifen und zwischen deren Kopf- oder Mutterteile (26) und dem Lagerauge (4) Tellerfedern (28) eingespannt sind.

7. Gelenkverbindung nach Anspruch 6, dadurch gekennzeichnet, daß eine die Achsen der Schraubbolzen (23) und die Bremszylinderachse (10) senkrecht schneidende Gerade (22) parallel zur Drehachse für das Lagerauge (4) verläuft.

8. Gelenkverbindung nach Anspruch 3 und 7, dadurch gekennzeichnet, daß im Übergangsbereich des Lagerauges (4) zum Bremszylinderteil (2, 3) eine Querverschiebung zwischen diesen beiden Teilen parallel zur Richtung der Geraden (22) ausschließende Querführung vorgesehen ist.

9. Gelenkverbindung nach Anspruch 8, dadurch gekennezeichnet, daß die Querführung eine an einem der Teile Lagerauge (4) oder Bremszylinderteil (2, 3) gehaltene Paßfeder (29) aufweist, deren Längsrichtung die Gerade (22) senkrecht überkreuzt, und daß die Paßfeder (29) in eine Nut (30) am jeweils anderen Teil eingreift, wobei zwischen der Paßfeder (29) und dem Nutgrund ein Spielabstand (31) vorhanden ist.

10. Gelenkverbindung nach einem oder mehreren der vorstehenden Ansprüche, dadurch gekennzeichnet, daß sich wenigstens eine der Lagerungsflächen (14, 18) auf einem Lagerungsring (13) befindet, der am Lagerauge (4) bzw. dem Bremszylinderteil (2, 3) befestigt ist.

## Claims

1. Articulated connection between a brake cylinder and a brake rod, particularly for a brake cylinder (1) arranged between the brake lever ends (6) of a brake caliper, comprising a bearing boss (4) held pivotably by a rotary surface support (14, 18) symmetrical to the brake cylinder axis (10) on a brake cylinder part representing the body (2) or the piston rod (3), on which bearing boss (4) a brake rod part, possibly the brake lever end (6), is articulated rotatably about a transverse pin (5), the rotary surface support (14, 18) having bearing surfaces (14, 18) encompassing the brake cylinder axis (10) in annular fashion in that transition area (17) of the bearing boss (4) that faces towards the brake cylinder part, wherein the rotary surface support (14, 18) is designed as a preloaded thrust bearing, the centre pivot point (15) or axis of rotation of the rotary support (14, 18) being arranged at least close to the contact point (27) of at least one screw fitting on the bearing boss (4), which contact point is elastically preloaded in the thrust direction and is located in that area of the surface (16) of the bearing boss (4) that faces away from the brake cylinder, and the screw fitting being held, after passing through the bearing boss (4), at the other side on the brake cylinder part (2, 3) with a certain lateral clearance.

2. Articulated connection as defined in Claim 1, wherein the bearing surfaces are cylindrical surfaces, with the cylinder axis perpendicularly intersecting the brake cylinder axis (10).

3. Articulated connection as defined in Claim 1, wherein the bearing surfaces (14, 18) are spherical surfaces, with the centre point (15) of the sphere being located on the brake cylinder axis (10).

4. Articulated connection as defined in Claim 1, 2 or 3, wherein the screw fitting passes through a surface encompassed by the bearing surfaces (14, 18).

5. Articulated connection as defined in one of the preceding Claims, wherein the screw fitting has a screwed stud extending coaxially to the brake cylinder axis (10), the shank of the said stud passing through the bearing boss with a certain lateral clearance and Belleville springs being clamped between the bearing boss and the head or nut part of the stud.

6. Articulated connection as defined in one of Claims 1 to 4, wherein the screw fitting has screwed studs (23) which are parallel to the brake cylinder axis (10) and which are staggered laterally in a mirror-inverted arrangement, the shanks (24) of the said screwed studs passing through the bearing boss (4) with a certain lateral clearance and Belleville springs (28) being clamped between the bearing boss (4) and the head or nut parts (26) of the said studs.

7. Articulated connection as defined in Claim 6, wherein a straight line (22) perpendicularly intersecting the axes of the screwed studs (23) and the brake cylinder axis (10) is parallel to the axis of rotation for the bearing boss (4).

8. Articulated connection as defined in Claims 3 and 7, wherein in the area of transition from the bearing boss (4) to the brake cylinder part (2, 3), there is a transverse guide excluding transverse shift between these two parts parallel to the direction of the straight line (22).

9. Articulated connection as defined in Claim 8, wherein the transverse guide has a feather key (29) which is held on either the bearing boss (4) or on one of the brake cylinder parts (2, 3) and whose longitudinal direction perpendicularly intersects the straight line (22), and wherein the feather key (29) engages a groove (30) on its mating part, a certain clearance (31) being left between the feather key (29) and the base of the said groove.

10. Articulated connection as defined in one or more of the preceding Claims, wherein at least one of the bearing surfaces (14, 18) is located on a bearing ring (13) which is attached to the bearing boss (4) or the brake cylinder part (2, 3).

## Revendications

1. Liaison à articulation entre un cylindre de frein et une tringlerie de frein, en particulier pour un cylindre de frein (1) disposé entre les extrémités des leviers de frein (6) d'une mâchoire de frein, avec un oeillet d'articulation monté à articulation sur une partie du cylindre de frein représentant le carter (2) ou la tige de piston (3), à l'aide d'un palier à surface de rotation (14, 18) qui est symétrique par rapport à l'axe du cylindre de frein (10), oeillet d'articulation auquel est articulé, à l'aide d'un boulon transversal (5), un élément de tringlerie de frein, éventuellement l'extrémité (6) du levier de frein, le palier à surface de rotation (14, 18) présentant, tout en entourant en forme d'anneau l'axe (10) du cylindre de frein, des surfaces de palier (14, 18) dans la partie de transition de l'oeillet d'articulation (4) qui est voisine de l'élément de cylindre de frein, caractérisé par le fait que le palier à surface de rotation (14, 18) est réalisé sous la forme d'un palier de butée à pré-armement, le centre de rotation (15) ou l'axe de rotation du palier à surface de rotation (14, 18) se situant au moins près du point d'attaque (27) d'au moins un moyen de vissage de l'oeillet (4), et qui se situe dans la zone, préarmée élastiquement dans le sens de la pression, de la surface (16) de l'oeillet (4), qui est éloignée du cylindre de frein, alors que le moyen de vissage, après passage par l'oeillet (4), est, par ailleurs, maintenue avec jeu latéral, au niveau de l'élément (2, 3) formant cylindre de frein.

2. Liaison à articulation selon la revendication 1, caractérisée par le fait que les surfaces du palier sont des surfaces cylindriques, l'axe du cylindre coupant à angle droit l'axe du cylindre de frein (10).

3. Liaison à articulation selon la revendication 1, caractérisée par le fait que les surfaces de palier (14, 18) sont des surfaces sphériques, le centre de la sphère (15) se situant sur l'axe du cylindre de frein (10).

4. Liaison à articulation selon la revendication 1, 2 ou 3, caractérisée par le fait que le vissage traverse une surface qui est entourée par les surfaces de palier (14, 18).

5. Liaison à articulation selon l'une des revendications précédentes, caractérisée par le fait que le vissage comporte un boulon qui s'étend coaxialement à l'axe du cylindre de frein (10), boulon dont la tige traverse l'oeillet de montage avec un jeu latéral, alors qu'entre la partie constituant la tête ou l'élément-écrou et l'oeillet de montage, sont serrés des ressorts Belleville.

6. Liaison à articulation selon l'une des revendications 1 à 4, caractérisée par le fait que le vissage comporte des boulons (23) décalés latéralement et symétriquement et parallèles à l'axe du cylindre de frein (10), les tiges (24) des boulons traversant l'oeillet de montage (4) avec un jeu latéral, et qu'entre l'élément constituant la tête ou la partie-écrou (26) et l'oeillet de montage, sont serrés des ressorts Belleville (28).

7. Liaison à articulation selon la revendication 6, caractérisée par le fait qu'une droite (22) qui coupe à angle droit les axes des boulons (23) et l'axe du cylindre de frein (10), s'étend parallèlement à l'axe de rotation pour l'oeillet de montage (4).

8. Liaison à articulation selon la revendication 3 et 7, caractérisée par le fait que dans la partie formant transition entre l'oeillet de montage (4) et l'élément de cylindre de frein (2, 3), est prévu un guidage transversal qui interdit un décalage transversal entre les deux éléments, parallèlement à la direction de la droite (22).

9. Liaison à articulation selon la revendication 8, caractérisée par le fait que le guidage transversal comporte une clavette (29) qui est maintenue sur l'une des parties de l'oeillet de montage (4) ou de l'élément formant cylindre de frein (2, 3), clavette dont la direction longitudinale croise à angle droit la droite (22), et que la clavette (29) pénètre dans une gorge (30) de l'autre élément, un jeu (31) étant ménagé entre la clavette (29) et le fond de la gorge.

10. Liaison à articulation selon ou ou plusieurs des revendications précédentes, caractérisée par le fait qu'au moins l'une des surfaces de palier (14, 18) se situe sur une bague de palier (13) qui est fixée à l'oeillet de montage (4) ou à l'èlément formant cylindre de frein (2, 3).

FIG. 1

FIG. 2

FIG. 3

0 186 767

FIG. 5

FIG. 4